# EUROPEAN PATENT APPLICATION

(11) **EP 2 468 572 A1**
(43) Date of publication of application: **27.06.2012**
(21) Application number: 11192948.5
(22) Date of filing: 12.12.2011
(51) Int. Cl.: B60R 1/00, G01B 11/275, G01M 17/02

(54) **Motor vehicle with a camera and method for operating a camera system in a motor vehicle**

(30) Priority: 21.12.2010 DE 102010055583
(71) Applicant: Connaught Electronics Ltd., Tuam, County Galway (IE)
(72) Inventor: Burke, Michael, Tuam, County Galway (IE); Denny, Patrick Eoghan, Roscam, County Galway (IE)
(74) Representative: Jauregui Urbahn, Kristian

(57) **Abstract**

A solution is to be demonstrated, how the functionality of a camera system (2) of a motor vehicle (1) can be extended compared to the prior art. A motor vehicle (1) is provided, which has at least one camera (3 to 8, 22, 23) disposed on the motor vehicle (1) for capturing images of at least a region of the motor vehicle (1). The motor vehicle (1) in addition includes a computing means (21) for processing the images. The computing means (21) can determine at least one parameter (α, β, V) based on the images, which describes a roadworthiness of the motor vehicle (1) with respect to the depicted region of the motor vehicle (1). In addition, a method for operating a camera system (2) in a motor vehicle (1) is provided.

## Description

The invention relates to a motor vehicle with at least one camera disposed on the motor vehicle - in particular in stationary or unmovable manner - which is adapted for capturing images of at least a region of the motor vehicle. The motor vehicle in addition includes a computing means processing the images. In addition, the invention relates to a method for operating a camera system in a motor vehicle.

Presently, the interest is in particular in a camera system (also known under the designation "vision system") of a motor vehicle. Here, it is a matter of a camera system fixedly installed in a motor vehicle. Such camera systems are already prior art. It is known to mount a plurality of cameras to the motor vehicle, which can capture the entire environment around the motor vehicle. The images of all of the cameras can then be processed with the aid of a computing means - like a digital signal processor - and the computing means can produce an image representation from the images of all cameras, which is then displayed on a display in the interior of the motor vehicle. Such an image representation can for example show the motor vehicle as well as its environment from a bird's eye view - the image representation is then a so-called "bird view" or "bird's eye view". However, the computing means can also merely use one image of a single camera or a partial region thereof, and for example display an environmental region behind the motor vehicle on the display (so-called "rear view"). Such a multi-camera system is for example known from the document US 2006/0139488 A1.

It is an object of the invention to reveal a way how the functionality of such a camera system stationary on the vehicle can be extended compared to the prior art in a motor vehicle of the initially mentioned type.

According to the invention, this object is solved by a motor vehicle having the features of claim 1, as well as by a method having the features of claim 15. Advantageous implementations of the invention are the subject matter of the dependent claims and of the description.

A motor vehicle according to the invention includes at one camera disposed on the motor vehicle - in particular in stationary or unmovable manner - for capturing images of at least a region of the motor vehicle. In addition, the motor vehicle has a computing means - inside the vehicle - for processing the images. According to the invention, it is provided that the computing means determines at one parameter based on the images, which describes a roadworthiness of the motor vehicle with respect to the depicted region of the motor vehicle.

Thus, a central idea of the present invention is in inferring a parameter related to the roadworthiness of the motor vehicle on the captured images of the at least one camera. The at one parameter thus in particular describes the roadworthiness of the motor vehicle, namely with respect to the depicted region of the motor vehicle. In this manner, it is managed to extend the functionality of the camera system consisting of the at one camera and the computing means compared to the prior art. Namely, in the motor vehicle according to the invention, the roadworthiness of the motor vehicle can also be verified during travel; thus, the driver does not have to drive to a garage with his motor vehicle in order to have his motor vehicle checked for the roadworthiness. In this manner, valuable time can be as well as the cost. Because the driver can be informed about the at least one parameter by the computing means, for instance with the aid of an optical and/or acoustical output means.

Unlike the subject matter according to printed matter JP 2004 212 364 A1, in the motor vehicle according to the invention, the verification of the roadworthiness of the motor vehicle can also occur during travel. Namely, the computing means and the at least one camera are components inside the motor vehicle or fixedly integrated in the motor vehicle.

For determining the at one parameter, preferably, at one camera anyway already present on the motor vehicle is used, namely, in particular at least one camera of an already present camera system (vision system). Overall, the at least one camera can thus have two functions: on the one hand, the images or an image representation extracted from it can be displayed on a display means of the motor vehicle; on the other hand, the images can also be used for determining the at least one parameter. In this manner, components can be saved as well as the valuable installation space.

Overall, a plurality of cameras can be disposed on the motor vehicle: a camera can be disposed in the left boundary region of the front bumper - it can be oriented in vehicle transverse direction and thus capture the environmental region on the left side of the motor vehicle - and/or a camera can be disposed in the right boundary region of the front bumper - it can also be oriented in vehicle transverse direction and capture the environmental region on the right side of the motor vehicle. Additional or alternatively, a camera can be integrated in the left exterior mirror and/or a camera can be integrated in the right exterior mirror. Additional or alternatively, a camera can also be disposed in the left boundary region of the rear bumper - it can also be oriented in vehicle transverse direction and capture the region on the left side of the motor vehicle - and/or a camera can be disposed in the right boundary region of the rear bumper - it can also be oriented in vehicle transverse direction and capture the environmental region on the right side of the motor vehicle. The at least one camera can have a relatively wide capturing angle, like in a range of values from 160° to 210°. It can also be the so-called fish-eye camera. Especially then it is allowed that the at one camera also captures regions of the motor vehicle and that these regions of the motor vehicle are also depicted in the images.

The at least one camera can for example be a CMOS camera (Complementary Metal Oxide Semiconductor) or else a CCD camera (Charge-Coupled Device).

It proves particularly advantageous if at least one camera is disposed on the motor vehicle such that it captures at least a region of a wheel of the motor vehicle or at least a region of the wheel is depicted in the images. Then, the computing means can determine at least one parameter describing the roadworthiness of the motor vehicle with respect to the wheel based on the images. In this embodiment, the parameter also describes the roadworthiness of the wheel. This provides for the safety of the vehicle passengers, because the roadworthiness or the quality of the wheels has a substantial influence on the roadworthiness of the entire motor vehicle. Thus, the driver does not have to drive to the garage and to have the wheels of the motor vehicle checked.

Based on the images of the at least one camera, the computing means can determine a camber angle of the wheel as the parameter. This means that the computing means can infer an inclination angle of the wheel plane with respect to a vertical based on the images. This embodiment provides for the safety of the vehicle passengers, because the camber angle influences the maximum cornering force of the motor vehicle upon cornering. If a critical camber angle is recognized, thus, this can be told to the driver and/or corresponding driver assistance systems can be driven, which can actively adjust the camber angle.

Additional or alternatively, the computing means can also determine a toe angle - in particular a toe-in angle - of the wheel on the images, thus an angle between the vehicle longitudinal axis and the wheel centerline in top plan view of the motor vehicle. In this manner it is managed to reduce the tyre wear of the wheel to a minimum, because a too great toe angle results in increased tyre wear of the wheels. In addition, this embodiment has the advantage that a correct tow angle reduces the fuel consumption and thus improves the fuel efficiency of the vehicle.

Additional or alternatively, the computing means can infer an axial offset between a front wheel and a rear wheel of the same vehicle side (wheel tracking) based on the images. If the offset between the front and the rear wheel of the same vehicle side in the vehicle transverse direction is too great, thus, this both straight-ahead driving and cornering of the motor vehicle. This embodiment too, therefore, provides for the safety of the vehicle passengers on the one hand, and also for driving comfort on the other hand. Namely, the driver can be informed about an incorrect axial offset.

Based on the images, the computing means can also determine a tyre pressure of a tyre. An incorrect tyre pressure of the tyre can result in increase of the fuel consumption and thus also in increase of the carbon dioxide emission of the motor vehicle. If an incorrect tyre pressure is indicated to the driver, thus, the fuel can be saved. A tyre with a correct tyre pressure principally exhibits a lower liability to bulging in the lower region than a tyre with incorrect tyre pressure. If the tyre pressure is incorrect, thus, such bulging can be recognized based on the images. The tyre pressure can principally be determined as binary information, like "tyre pressure correct" or "tyre pressure incorrect". Such information can then be indicated to the driver.

In an embodiment, the computing means determines a tyre wear of the wheel based on the images. Here, the computing means can determine the uniform or consistent (homogenous) wear of the entire tyre and/or the non-uniform distribution of the tyre wear or the wear pattern. The tyre wear as a parameter can for example be determined as a percentage of the not yet worn tyre or as binary information - like "tyre worn" or "tyre not worn". This embodiment has the advantage that the safety of the vehicle passengers on the one hand and also the driving comfort on the other hand is provided. In addition, the legal stipulations with respect to the tyre wear are served. Not least, the driver does not have to drive to a garage to check his wheels for tyre wear. The computing means takes this task for him.

It proves advantageous if the computing means determines a measure of hazard for the loss of at least one vehicle part based on the images. The vehicle part can for example be an outside panel part of the motor vehicle. However, such a vehicle part can also be a wheel cap of the wheel and/or a mud flap. This embodiment relies on the realization that the risk of loss of the wheel cap is particularly high in particular upon driving through a puddle of water. Namely, water then flows through the rim and can cause detachment of the wheel cap. If water is recognized by the computing means based on the images, thus, the computing means can interpret this as an increased risk of loss of the wheel cap. An increased measure of hazard for the loss of a vehicle part can also exist if the computing means recognizes a wiggling vehicle part, in particular a wiggling wheel cap and/or a wiggling outside panel part, based on the images. The measure of hazard too, can thus be determined as multi-level information, like "high measure of hazard" or "low measure of hazard" or even "vehicle part already lost". This embodiment has the advantage that the loss of the vehicle part or the risk of loss can be indicated to the driver. Thus, the driver can secure the vehicle part or he can find a lost vehicle part.

By establishing the presence of a mud flap, the computing means can be prevented from confusing the tyre with its mud flap when determining the parameters of a wheel.

Additionally or alternatively, the computing means can also determine a measure of hazard for a tyre failure of the wheel based on the images. This embodiment exploits the fact that a tyre failure usually is caused by a worn failure point of the tyre, which tends to bulging. This can be recognized by the computing means based on the images and optionally indicated to the driver. The measure of hazard for the tyre failure can also be determined as multi-level - for example binary or ternary - information, namely for example "high measure of hazard" or "low measure of hazard" or even "tyre failure already present".

The camera can also be disposed on the motor vehicle such that at least a region of a door of the motor vehicle is depicted in the images. Then, based on the images, the computing means can determine at least one parameter describing the roadworthiness of the motor vehicle with respect to the vehicle door. It proves advantageous if the computing means is configured to determine a closing state of the vehicle door as the parameter, based on the images. This parameter can be determined as binary information, such as, for example, "door closed properly" or "door open".

Additionally or alternatively, a camera can also be disposed on the motor vehicle such that at least a region of a lighting device of the motor vehicle is depicted in the images. On the basis of the images, the computing means can then determine at least one parameter describing the roadworthiness of the motor vehicle with respect to the lighting device. The lighting device can, for example, be an illuminant for lighting a vehicle license plate and/or a headlamp and/or a tail lamp. For instance, the computing means can be configured to determine an activation state of the lighting device as the parameter, based on the images. This parameter can also be determined as binary information, namely as "lighting device activated" or "lighting device deactivated". Thus, the driver can be informed about whether the lighting device is currently activated or whether it is out of order.

The motor vehicle can also include an acoustical and/or an optical output means, which serves for outputting the at one parameter. Thus, the driver can be informed about the determined parameter, namely in optical and/or acoustical manner. Such an approach is user-friendly and additionally provides for the safety of the vehicle passengers. Thus, a driver assistance system or a camera system is provided with the computing means and the at least one camera, which verifies the roadworthiness of the motor vehicle based on the images and informs the driver about the roadworthiness of the motor vehicle.

It is also reasonably possible that the computing means also transmits information about the determined parameter to another driver assistance system or a further control device. The other control device can then perform predetermined actions depending on the determined parameter, like adjusting the toe angle and/or the camber angle.

In addition, the invention relates to a method for operating a camera system of a motor vehicle. Images of at least a region of the motor vehicle are captured by at least one camera of the camera system disposed on the motor vehicle and are processed by its computing means. The computing means determines at least one parameter based on the images, which describes a roadworthiness of the motor vehicle with respect to the depicted region of the motor vehicle.

The preferred embodiments presented with respect to the motor vehicle according to the invention and the advantages thereof correspondingly apply to the method according to the invention.

Further features of the invention are apparent from the claims, the figures and the description of figures. All of the features and feature combinations mentioned above in the description as well as the features in and feature combinations mentioned below in the description of figures and/or shown in the figures alone are usable not only in the respectively specified combinations, but also in other combinations or else alone.

Now, the invention is explained in more detail by way of individual preferred embodiments as well as with reference to the attached drawings.

There show:
- Fig. 1: in schematic illustration a motor vehicle with a driver assistance system and camera system, respectively, according to an embodiment of the invention;
- Fig. 2: in schematic illustration an image of a wheel captured by a camera of the motor vehicle;
- Fig. 3: in schematic illustration a side view of the motor vehicle according to Fig. 1;
- Fig. 4: in schematic illustration a wheel of the motor vehicle, wherein a camber angle of the wheel is explained in more detail;
- Fig. 5: in schematic illustration a plan view of two wheels of the same axle of the motor vehicle, wherein a toe angle is explained in more detail;
- Fig. 6a: in schematic illustration the motor vehicle with a correct axial offset between a front and a rear wheel of the same vehicle side;
- Fig. 6b: in schematic illustration the motor vehicle with an incorrect offset of the mentioned wheels;
- Fig. 7a: in schematic illustration a tyre with a correct tyre pressure; and
- Fig. 7b: in schematic illustration a tyre with an incorrect tyre pressure.

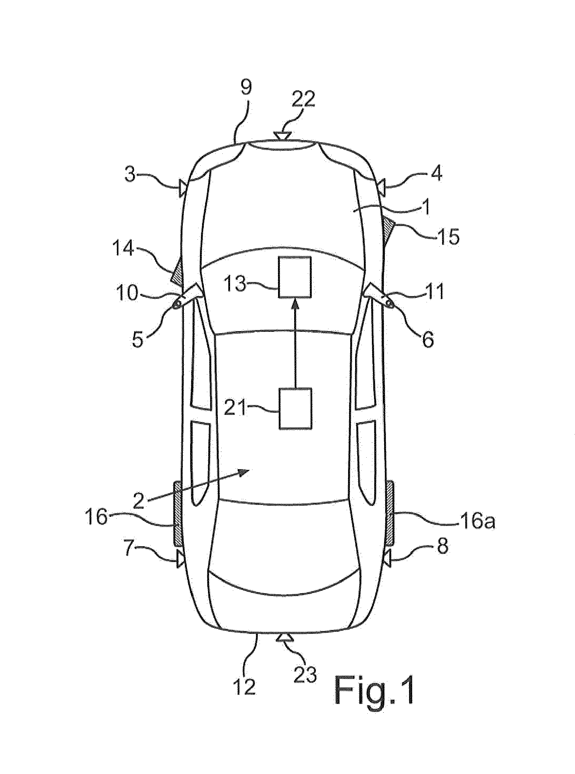

A motor vehicle 1 shown in Fig. 1 is a passenger car in the embodiment. The motor vehicle 1 includes a driver assistance system 2, which is a camera system. The driver assistance system 2 has a plurality of cameras, namely a first camera 3, a second camera 4, a third camera 5, a fourth camera 6, a fifth camera 7 as well as a sixth camera 8. The cameras 3 to 8 can for example include CMOS cameras and/or CCD cameras.

The first camera 3 is disposed in the front of the left side flank - in the left region of a front bumper 9, for example -, while the second camera 4 is mounted mirror-symmetrically in the front of the right side flank, namely in the right region of the same bumper 9, for instance. The cameras 3, 4 are substantially oriented in vehicle transverse direction such that the first camera 3 captures the environmental region on the left side of the motor vehicle 1, while the second camera 4 captures the environmental region on the right side of the motor vehicle 1. The third camera 5 is integrated in a left exterior mirror 10 and the fourth camera 6 is integrated in a right exterior mirror 11. The cameras 5, 6 can be mounted to the respective exterior mirror 10, 11 such that they face downwards in the vehicle height direction. The fifth camera 7 is mounted in the rear area of the left side frank - in the left boundary region of a rear bumper 12, for example -, and the sixth camera 8 is disposed mirror-symmetrically in the rear area of the right side flank, namely in the right boundary region of the same bumper 12, for example. The cameras 7, 8 are also substantially oriented in vehicle transverse direction, wherein the fifth camera 7 faces to the left and the right camera 8 faces to the right.

In addition, further cameras 22 and 23 can be provided: The camera 22 can be disposed on the front side of the vehicle 1, for example centrally on the front bumper 9, while the camera 23 can be disposed on the rear of the vehicle 1, namely centrally on the rear bumper 12, for instance.

In principle, the cameras 3 to 8 and 22 and 23 can have a relatively wide capturing angle - even up to 210° - such that they can also capture regions and components of the motor vehicle 1, respectively. The cameras 3 to 8 and 22 and 23 capture images or image data. Both the environment of the motor vehicle 1 and - as already explained - several regions of the motor vehicle 1 itself are depicted in the images. The cameras 3 to 8 and 22 and 23 transmit the images (and more precisely the image data) to a computing means 21 of the driver assistance system 2, which processes the received images. The computing means 21 can produce an image representation from the images of the cameras 3 to 8 and 22 and 23, which is then displayed on an optical display means 13 of the driver assistance system 2. The display means 13 can for example be an LCD display or else a head-up display.

Besides the function of displaying image representations on the display means 13, the driver assistance system 2 or the computing means 21 also has a further function: The computing means 21 can also check the motor vehicle 1 for its roadworthiness with respect to the depicted regions of the motor vehicle 1 based on the image data. As already explained, namely, the cameras 3 to 8 and 22 and 23 also capture several regions of the motor vehicle 1, for instance due to their relatively wide respective capturing angles as well as the arrangement on the motor vehicle 1. Thus, for example, the cameras 3 to 6 capture the steerable wheels 14, 15 of the motor vehicle 1 as well as its doors, while the cameras 7, 8 can capture the rear wheels 16 and 16a. On the other hand, the cameras 22, 23 can capture the headiamps and the tail lamps as well as illuminants for lighting the respective vehicle license plate.

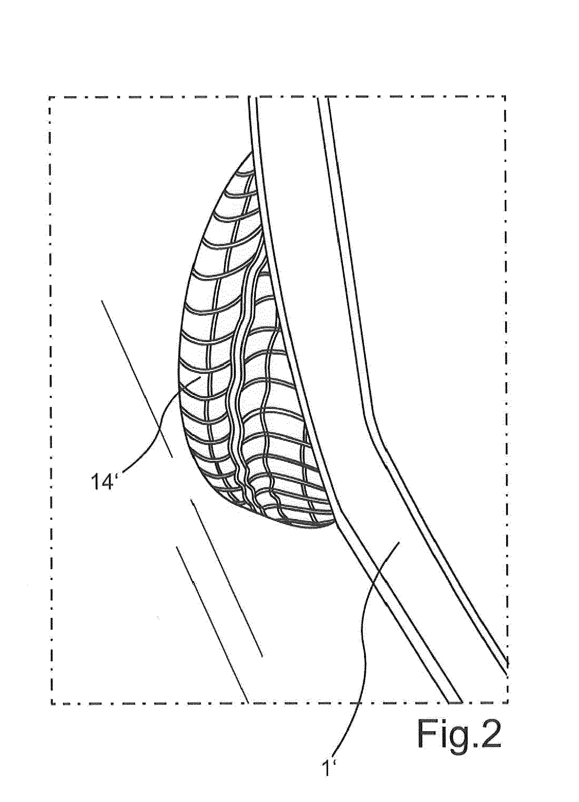

In Fig. 2, an exemplary image is illustrated as it can be captured by the camera 5. The front left wheel 14' as well as a portion of a side door of the motor vehicle 1' is depicted.

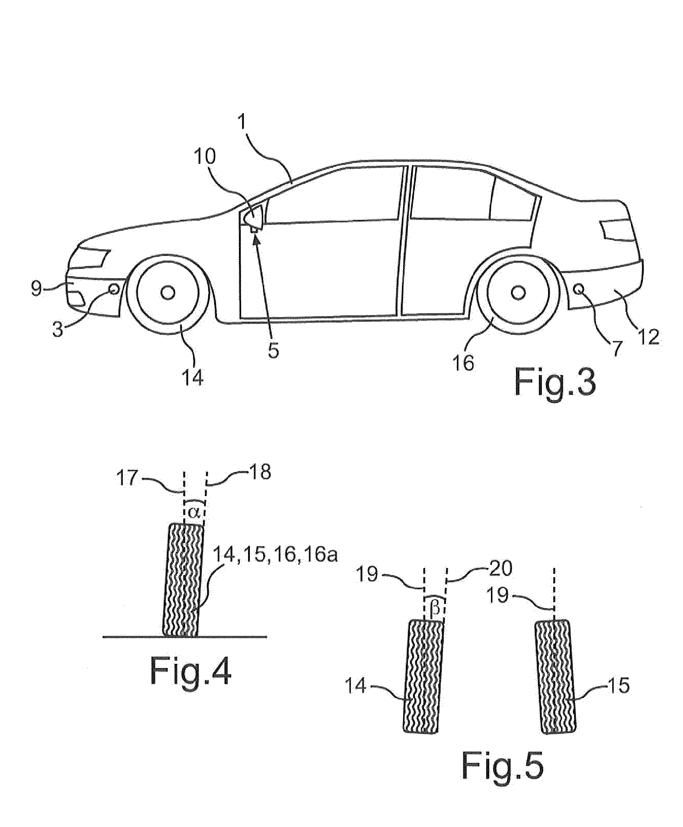

In Fig. 3, a side view of the motor vehicle 1 is shown in schematic illustration. From Fig. 3, the arrangement of the cameras 3, 5 and 7 is apparent: The camera 3 is mounted in the left boundary region of the front bumper 9, for instance besides the front left wheel 14. The camera 5 is integrated in the left exterior mirror 10 and faces downwards or towards the bottom in vehicle height direction. The camera 7 is mounted in the left boundary region of the rear bumper 12, for instance besides the rear left wheel 16.

Thus, the cameras 3 to 8 can capture at least the wheels 14, 15, 16, 16a of the motor vehicle 1. The computing means 21 can check the motor vehicle 1 for its roadworthiness based on the image data of the cameras 3 to 8, namely with respect to the front steerable wheels 14, 15 as well as the rear wheels 16, 16a. Based on the images, the computing means 21 can determine the following parameters describing the roadworthiness of the motor vehicle 1 and of the wheels 14, 15, 16, 16a, respectively:
- the respective camber angle a of the wheels 14, 15, 16, 16a;
- the respective toe angle β of the wheels 14, 15, 16, 16a;
- an axial offset V (offset in vehicle transverse direction, also known as "wheel tracking") between a front wheel 14, 15 and a rear wheel 16, 16a of the same vehicle side;
- a tyre pressure of the respective tires of the wheels 14, 15, 16, 16a;
- the respective tyre wear of the wheels 14, 15, 16, 16a - both the homogeneous or consistent tyre wear and an inhomogeneous distribution of the tyre wear;
- a measure of hazard for the loss of a component of the motor vehicle 1, in particular of a wheel cap; and
- a measure of hazard for a tyre failure of the wheels 14, 15, 16, 16a.

With reference to Fig. 4, the camber angle a denotes an angle between a vertical 17 and a wheel plane 18. The computing means 21 can for example determine this camber angle a upon straight-ahead driving of the motor vehicle 1 based on the images of the cameras 3 to 8.

Fig. 5 shows a top plan view of the front wheels 14, 15 of the motor vehicle 1. The toe angle β (here toe-in) denotes an angle between the vehicle longitudinal axis 19 and a wheel plane 20 in top plan view.

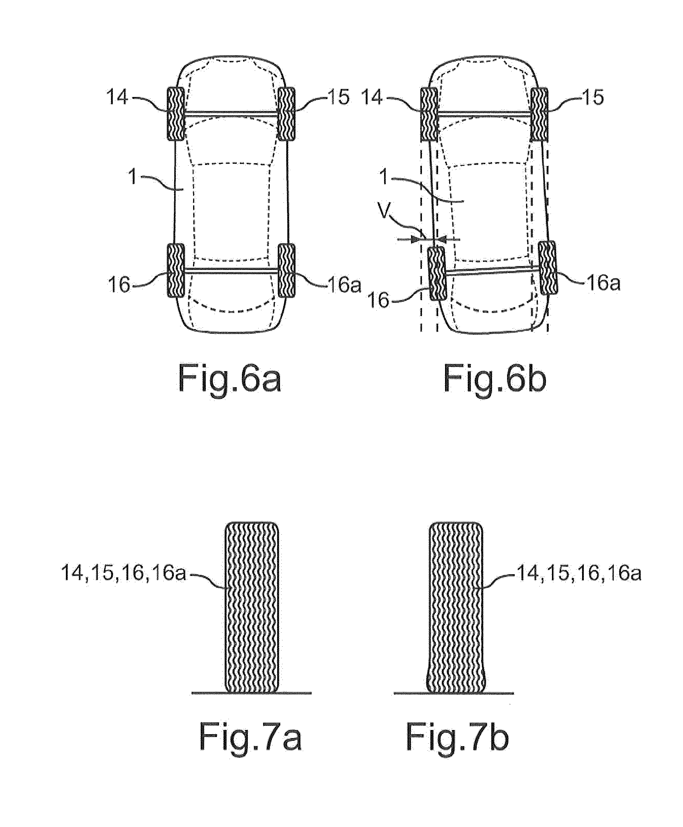

The computing means 21 can also determine the axial offset V between a front wheel 14, 15 and the rear wheel 16, 16a of the same vehicle side. In Fig. 6a, the motor vehicle 1 is illustrated, in which a correct offset V is present. In contrast, in Fig. 6b, the motor vehicle 1 is illustrated, in which the axial offset V is greater than zero and thus unfavorable. The computing means 21 can correspondingly recognize this based on the images of the cameras 3 to 8.

As already explained, the computing means 21 can also determine the respective tyre pressure of the wheels 14, 15, 16, 16a based on the images of the cameras 3 to 8. This can be configured such that the tyre pressure is determined as binary information, for instance "correct tyre pressure" or "incorrect tyre pressure". In Fig. 7a, a wheel 14, 15, 16, 16a is illustrated, the tyre of which has a correct tyre pressure. In contrast, in Fig. 7b, a wheel 14, 15, 16, 16a is shown, the tyre of which has an unfavorable tyre pressure. As is apparent from Fig. 7b, such a tyre tends to bulging in the lower region, namely due to the weight of the motor vehicle 1. The computing means 21 can recognize such bulging based on the images and optionally warn the driver.

On the basis of the image data of the cameras 3 to 8, the computing means 21 can also determine a closing state of the doors of the vehicle 1. The computing means 21 can thus detect that a door of the vehicle 1 is not closed property. This state can be indicated to the driver.

Based on the image data of the cameras 22 and 23, the computing means 21 can additionally determine an activation state of said lighting devices, namely of the head lamps, the tail lamps and the illuminants for lighting the vehicle license plates. If, for instance, one of the illuminants fails, the computing means 21 can detect and indicate this state to the driver.

The computing means 21 can also output the above mentioned parameters with the aid of the display means 13 and/or an acoustical output means - like a loudspeaker - and correspondingly inform the driver.

Overall, thus, a driver assistance system 2 is provided, which is improved in its functionality compared to the prior art. Besides the display of images on the display means 13, the driver assistance system 2 can also perform a serviceability verification of the motor vehicle 1 basel on the captured images of the cameras 3 to 8 and 22 and 23.

## Claims

1. Motor vehicle (1) including at least one camera (3 to 8, 22, 23) disposed on the motor vehicle (1) for capturing images of at least a region (14,15, 16, 16a) of the motor vehicle (1) and inducting a computing means (21) for processing the images, the computing means (21) is configured to determine at least one parameter (α, β, V) based on the images, which describes a roadworthiness of the motor vehicle (1) with respect to the depicted region (14, 15, 16, 16a) of the motor vehicle (1),
the camera (3 to 8, 22, 23) is disposed on the motor vehicle (1) such that at least a region of at least one wheel (14, 15, 16, 16a) of the motor vehicle (1) is depicted in the images, wherein the computing means (21) is configured to determine at least one parameter (α, β, V) describing the roadworthiness of the motor vehicle (1) with respect to the wheel (14, 15, 16, 16a) based on the images **characterized in that**
the computing means (21) is configured to determine an axial offset (V) between a front wheel (14, 15) and a rear wheel (16, 16a) of the same vehicle side as the parameter based on the images.

2. Motor vehicle (1) according to claim 1,
**characterized in that**
the computing means (21) is configured to determine a camber angle (α) of the wheel (14, 15, 16, 16a) as the parameter based on the images.

3. Motor vehicle (1) according to claim 1 or 2,
**characterized in that**
the computing means (21) is configured to determine a toe angle (β) of the wheel (14, 15, 16, 16a) as the parameter based on the images.

4. Motor vehicle (1) according to any one of claims 1 to 3,
**characterized in that**
the computing means (21) is configured to determine a tyre pressure of a tyre as the parameter based on the images.

5. Motor vehicle (1) according to any one of claims 1 to 5,
**characterized in that**
the computing means (21) is configured to determine a tyre wear of the wheel (14, 15, 16, 16a) as the parameter based on the images.

6. Motor vehicle (1) according to any one of claims 1 to 5,
**characterized in that**
the computing means (21) is configured to determine a measure of hazard for the loss of a vehicle part, in particular a wheel cap and/or a mud flap, as the parameter based on the images.

7. Motor vehicle (1) according to any one of claims 1 to 6,
**characterized in that**
the computing means (21) is configured to determine a measure of hazard for a tyre failure of the wheel (14, 15, 16, 16a) as the parameter based on the images.

8. Motor vehicle (1) according to any one of the preceding claims,
**characterized in that**
the camera (3 to 8, 22, 23) is disposed on the motor vehicle (1) such that at least a region of a door of the motor vehicle (1) is depicted in the images, wherein the computing means (21) is configured to determine at least one parameter describing the roadworthiness of the motor vehicle (1) with respect to the vehicle door based on the images.

9. Motor vehicle (1) according to claim 8,
**characterized in that**
the computing means (21) is configured to determine a closing state of the vehicle door as the parameter based on the images.

10. Motor vehicle (1) according to any one of the preceding claims,
**characterized in that**
the camera (3 to 8, 22, 23) is disposed on the motor vehicle (1) such that at least a region of a lighting device of the motor vehicle (1) is depicted in the images, wherein the computing means (21) is configured to determine at least one parameter describing the roadworthiness of the motor vehicle (1) with respect to the lighting device based on the images.

11. Motor vehicle (1) according to claim 10,
**characterized in that**
the computing means (21) is configured to determine an activation state of the lighting device as the parameter based on the images.

12. Motor vehicle (1) according to any one of the preceding claims,
**characterized by**
an acoustical and/or optical output means (13) for outputting the at least one parameter (α, β, V).

13. Method for operating a camera system (2) in a motor vehicle (1), in which images of at least a region (14, 15, 16, 16a) of the motor vehicle (1) are captured by at least one camera (3 to 8, 22, 23) of the camera system (2) disposed on the motor vehicle (1) and are processed by a computing means (21) of the camera system (2),
**characterized in that**
the computing means (21) determines, based on the images, at least one parameter (α, β, V), which describes a roadworthiness of the motor vehicle (1) with respect to the depicted region (14, 15, 16, 16a) of the motor vehicle (1).
